**Europäisches Patentamt**

**European Patent Office**

**Office européen des brevets**

(19)

(11) Veröffentlichungsnummer: **0 200 184**

**A1**

(12) # EUROPÄISCHE PATENTANMELDUNG

(21) Anmeldenummer: **86105793.3**

(22) Anmeldetag: **26.04.86**

(51) Int. Cl.⁴: **C08L 25/12 , C08K 7/14**

(30) Priorität: **03.05.85 DE 3515867**

(43) Veröffentlichungstag der Anmeldung:
**10.12.86 Patentblatt 86/45**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Seiler, Erhard, Dr.**
**Erpolzheimer Strasse 1**
**D-6700 Ludwigshafen(DE)**
Erfinder: **Hambrecht, Juergen, Dr.**
**Am Klosterwald 31**
**D-4400 Münster-Hiltrup(DE)**

(54) **Verstärkte thermoplastische Formmasse.**

(57) Die Erfindung betrifft verstärkte thermoplastische Formmasse, bestehend aus

A einem Copolymeren, aufgebaut aus

90 bis 50 Gew.-%, bezogen auf A, Styrol, $\alpha$-Methylstyrol, einem $a_1$) kernalkylsubstituierten Styrolderivat oder Mischungen dieser Monomeren,

$a_2$) 10 bis 50 Gew.-% (Meth)-acrylnitril,

B einem Terpolymerisat, das besteht aus

$b_1$) 90 bis 59 Gew.-%, bezogen auf B, eines Monomeren aus der Gruppe von Styrol, $\alpha$-Methylstyrol, den kernalkylierten Styrolen oder Mischungen dieser Monomeren,

$b_2$) 8 bis 48 Gew.-%, bezogen auf B, - (Meth)-acrylnitril

und

$b_3$) 2 bis 30 Gew.-%, bezogen auf B, eines Monomeren aus der Gruppe der Acrylsäure, der Methacrylsäure, des Maleinsäureanhydrids oder Mischungen dieser Monomeren

und

Glasfasern als Verstärkungsmittel.

Die Erfindung betrifft ferner ein Verfahren zur Herstellung von Formmassen und die Verwendung der Formmasse zur Herstellung von Formteilen.

EP 0 200 184 A1

## Verstärkte thermoplastische Formmasse

Die Erfindung betrifft eine verstärkte thermoplastische Formmasse aus einem Styrol-(Meth)acrylnitril-Copolymerisat, einem Styrol enthaltenden Terpolymerisat, das ein Verstärkungsmittel, z.B. Glasfasern, aufweist.

Zum Stand der Technik nennen wir:

(1) Ullmann's Encyclopädie der technischen Chemie, Bd. 19, 4. Auflage (1980) S. 272 f.

(2) DE-OS 19 49 487

(3) DE-OS 33 32 326

Copolymerisate aus Styrol und Acrylnitril sind aus (1) bekannt. Sie lassen sich gut thermoplastisch verarbeiten, sind ziemlich hart und weisen im Vergleich zu reinem Polystyrol eine hervorragende Lösungsmittelbeständigkeit auf. Ihre Zähigkeit läßt jedoch zu wünschen übrig. Es ist bekannt, daß man die Schlagzähigkeit von harten Styrol-Acrylnitril-Copolymerisaten verbessern kann, wenn man sie mit einer weichen kautschukelastischen Komponente abmischt. Solche Weichkomponenten können hergestellt werden durch Polymerisation eines Gemisches von Styrol und Acrylnitril in Gegenwart eines Kautschuks, wobei zumindest ein Teil der Monomeren auf den Kautschuk gepfropft ist. Diese Formmassen weisen eine zufriedenstellende Schlagzähigkeit auf, sie haben jedoch den Nachteil, daß sie beim Erwärmen auf Temperaturen von etwa 100°C und darüber ihre Form verändern und schrumpfen: d.h., sie haben eine geringe Wärmeformbeständigkeit. Um das Schrumpfen zu vermeiden, ist es nun bekannt, Verstärkermaterialien den SAN-Copolymerisaten zuzusetzen. So sind z.B. glasfaserverstärkte SAN-Copolymerisate am Markt eingeführt. Wesentlicher Nachteil dieser Produkte ist das Ungleichgewicht zwischen Steifigkeit und Zähigkeit; hin und wieder ist auch die Wärmeformbeständigkeit nicht ausreichend.

Copolymerisate aus Styrol und Maleinsäureanhydrid sind ebenfalls aus (1) bekannt. Sie beginnen erst bei relativ hohen Temperaturen zu erweichen und ihre Form zu verändern. Ihre mechanischen Eigenschaften, wie Steifigkeit und Zähigkeit sind jedoch unbefriedigend. Es ist weiter bekannt, daß einige wenige thermoplastische Kunststoffe miteinander mischbar sind. Die weitaus größte Zahl der Kunststoffe erweisen sich jedoch als unverträglich, wenn man versucht, aus zwei oder mehreren Komponenten Mischungen herzustellen: Unverträglichkeit ist die Regel und Mischbarkeit ist die Ausnahme vgl. z.B. L. Bohn,

Kolloid-Zeitschrift 213, (1966), Seite 55 oder G.E. Molau, Journal of Polymer Science, Teil B, 3, - (1965) Seite 1007 oder B.J. Schmitt, Angew. Chem. 91, (1979) 296. Verträglichkeit ist in der Regel aber Voraussetzung dafür, daß Kunststoffmischungen brauchbare Eigenschaften haben: Wenn die Komponenten einer Kunststoffmischung unverträglich sind, stellen die Phasengrenzen Keimstellen für Bruch dar. Diese Aussage behält auch bei verstärkten Kunststoffmischungen ihre Gültigkeit, wenngleich die oben geschilderten Phänomene in geringerem Maße zur Wirkung kommen.

In (2) werden Mischungen aus Styrol-Maleinsäureanhydrid-Copolymeren und Pfropfkautschuken auf Basis von Polybutadien, Butadien-Acrylsäureester-Mischpolymeren und Polyacrylsäureestern und gegebenenfalls SAN-Copolymeren beschrieben, deren mechanische Eigenschaften zwar gegenüber herkömmlichen ABS-Polymerisaten abfallen, deren Steifigkeit und Wärmeformbeständigkeit jedoch verbessert ist. Gibt man zu diesen Mischungen Verstärkermaterialien hinzu, und die Vergleichsversuche in Tabelle 2 verdeutlichen dies, so genügt die Eigenschaftskombination aus Steifigkeit, Zähigkeit und Wärmeformbeständigkeikt höheren Ansprüchen nicht mehr. Daran ändert sich auch nichts, wenn die in (3) beschriebenen verträglichen Matrixpolymeren verwendet werden. Ganz offenbar ist die Wechselwirkung zwischen Matrixpolymeren und Verstärkermaterialien nicht ausreichend.

Es bestand deshalb die Aufgabe, verstärkte thermoplastische Formmassen auf der Basis von Styrol-(Meth)acrylnitril-Copolymerisaten herzustellen, die eine ausgewogene Eigenschaftskombination aus hoher Steifigkeit bei gleichzeitig hoher Zähigkeit und hoher Wärmeformbeständigkeit aufweisen.

Die Lösung dieser Aufgabe gelingt durch die im Patentanspruch 1 genannten Polymermischungen.

Die Erfindung betrifft somit verstärkte thermoplastische Formmassen, bestehend aus

A 5 bis 95 Gew.-%, bezogen auf A + B + C, mindestens eines Copolymeren, aufgebaut aus

a₁) 90 bis 50 Gew.-%, bezogen auf A, Styrol, α-Methylstyrol, einem kernalkylsubstituierten Styrolderivat oder Mischungen dieser Monomeren,

a₂)

10 bis 50 Gew.-% (Meth)-acrylnitril,

B 95 bis 5 Gew.-%, bezogen auf A + B + C, mindestens eines Styrol als Monomerenbaustein enthaltenden Terpolymerisates,

C 5 bis 50 Gew.-%, bezogen auf A + B + C, eines Verstärkungsmittels.

Die Formmasse ist dadurch gekennzeichnet, daß sie als Terpolymerisat B ein solches aufweist, das besteht aus

$b_1$) 90 bis 59 Gew.-%, bezogen auf B, eines Monomeren aus der Gruppe von Styrol, $\alpha$-Methylstyrol, den kernalkylierten Styrolen oder Mischungen dieser Monomeren,

$b_2$) 8 bis 48 Gew.-%, bezogen auf B, (Meth)-acrylnitril und

$b_3$) 2 bis 30 Gew.-%, bezogen auf B, eines Monomeren aus der Gruppe der Acrylsäure, der Methacrylsäure, des Maleinsäureanhydrids oder Mischungen dieser Monomeren

und daß die Formmasse ferner als Verstärkungsmittel C an sich bekannte Glasfasern enthält.

Nachstehend werden der Aufbau der erfindungsgemäßen Formmasse aus den Komponenten, die Herstellung der Komponenten und die der Formmasse beschrieben.

Die Formmasse besteht, jeweils bezogen auf die Formmasse aus A + B + C, zu 5 bis 95 Gew.-%, vorzugsweise 40 bis 95 Gew.-%, insbesondere 45 bis 65 Gew.-% der Komponente A,

5 bis 95 Gew.-%, vorzugsweise 5 bis 50 Gew.-%, insbesondere 5 bis 35 Gew.-% der Komponente B,

5 bis 50 Gew.-%, vorzugsweise 15 bis 40 Gew.-%, insbesondere 25 bis 40 Gew.-% der Komponente C.

Außerdem kann die Formmasse, jeweils bezogen auf 100 Gew.-Teile A + B + C, noch enthalten

bis zu 50 Gew.-Teile, vorzugsweise 1 bis 50 Gew.-Teile und insbesondere 10 bis 40 Gew.-Teile der Komponente D, sowie

bis zu 20 Gew.-Teilen, insbesondere 0,1 bis 20 Gew.-Teile und vorzugsweise 0,1 bis 10 Gew.-Teile an Zusatzstoffen (Komponente E).

Komponente A

Als Komponente A der erfindungsgemäßen Formmasse werden Styrol-(Meth)-acrylnitril-Copolymerisate angewendet; diese bestehen im wesentlichen aus Copolymerisaten, die 10 bis 50 Gew.-%, insbesondere 20 bis 40 Gew.-%, (Meth)acrylnitril, vorzugsweise Acrylnitril $a_2$), und 50 bis 90 Gew.-%, insbesondere 60 bis 80 Gew.-%, Styrol, $\alpha$-Methylstyrol und/oder ein kernalkylsubstituiertes Styrol oder deren Mischungen einpolymerisiert enthalten. Der Styrolbestandteil kann, um die Wärmeformbeständigkeit zu verbessern, ganz oder teilweise durch $\alpha$-Methylstyrol oder kernalkyliertes Styrol, insbesondere p-Methylstyrol, ersetzt sein. Die bevorzugt angewendeten Styrol-Acrylnitril-Copolymerisate sind im Handel erhältlich und können z.B. nach der Lehre der DE-AS 10 01 001 bzw. DE-PS 1 003 436 hergestellt werden. Der Molekulargewichtsbereich der Copolymerisate kann $\overline{M}_w = 8.10^4$ bis $\overline{M}_w = 5.10^5$ (Gewichtsmittel $\overline{M}_w$ aus Lichtstreuung) betragen.

Komponente B

Das Copolymerisat B wird durch kontinuierliche Mischpolymerisation der Monomeren $b_1$), $b_2$) und $b_3$) bei hohen Temperaturen unter starkem Rühren hergestellt. Die Monomeren $b_1$), $b_2$) und $b_3$) werden dazu kontinuierlich in ein Polymerisationsgefäß eingebracht und gleichzeitig wird eine diesen Mengen entsprechende Menge des Polymerisationsgemisches aus dem Gefäß abgezogen (vgl. A.W. Hanson, R.L. Zimmermann, Industrial Eng. Chemistry 49, (1957) Seite 803). Das Monomere $b_1$), das im wesentlichen Styrol und/oder $\alpha$-Methylstyrol ist, aber auch ein kernalkyliertes Styrol, wie p-Methylstyrol oder p-tert.-Butylstyrol, sein kann, ist in Mengen von 50 bis 90 Gew.-%, vorzugsweise von 60 bis 85 Gew.-%, das Monomere $b_2$) (Meth)acrylnitril, vorzugsweise Acrylnitril, in Mengen von 8 bis 48 Gew.-%, vorzugsweise 10 bis 30 Gew.-% und das Monomere $b_3$), (Meth)-acrylnitril und/oder Maleinsäureanhydrid in Mengen von 2 bis 30 Gew.-%, vorzugsweise 5 bis 15 Gew.-% im Copolymerisat B enthalten (einpolymerisiert).

Das Terpolymerisat weist Viskositätszahlen im Bereich von 30 bis 150, vorzugsweise von 40 bis 120, gemessen in 0,5 % Lösungen in Dimethylformamid bei 25°C, auf.

Komponente C

Die erfindungsgemäße Formmasse enthält übliche Verstärkungsmaterialien. Besonders bevorzugt sind glasfaserverstärkte Formmassen, wobei die Glasfasern sowohl als Kurzglasfasern mit einer mittleren Länge von 0,05 bis 1,5 mm oder in Granulatlänge (Glasfaserlänge von 2,0 bis 10 mm) vorliegen können.

Die verwendeten Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 $\mu$m. Es können sowohl Endlosfasern (rovings) als auch Schnittglasfasern mit einer Länge von 1 bis 10 mm, vorzugsweise 3 bis 6 cm, eingesetzt werden.

Komponente D

Die Komponente D ist ein Pfropfmischpolymerisat, das gegebenenfalls angewendet wird. Dieses Pfropfmischpolymerisat ist aufgebaut, jeweils bezogen auf D, aus 10 bis 50 Gew.-%, vorzugsweise 15 bis 45 Gew.-%, eines Gemisches aus mindestens einem vinylaromatischen Monomeren $d_2$), das bis zu 12 Kohlenstoffatome enthält, und 1 bis 49 Gew.-%, vorzugsweise 5 bis 40 Gew.-%, mindestens eines (Meth)acrylsäureesters und/oder von (Meth)acrylnitril $d_3$) als Pfropfhülle, auf 50 bis 90 Gew.-%, insbesondere 60 bis 80 Gew.-%, einer elastomeren Pfropfgrundlage (Kautschukkomponente $d_1$).

Die Herstellung des Pfropfmischpolymerisates D ist an sich bekannt. Es kann z.B. hergestellt werden durch Polymerisation eines Gemisches von Styrol und Acrylnitril und/oder (Meth)acrylnitril in Gegenwart eines Kautschuks.

Der Kautschuk $d_1$) soll eine Glastemperatur - (nach K.H. Illers und H. Breuer, Kolloid-Zeitschrift 176, (1961), Seite 110) haben, die unter 0°C, vorzugsweise unter -30°C liegt. Als Kautschuk kommen z.B. in Betracht: Polybutadien (vgl. DE-OS 14 20 775 und DE-OS 14 95 089) Copolymerisate aus Butadien und Styrol (vgl. GB-PS 649 166), Polyacrylsäureester (vgl. DE-AS 12 60 135), sowie Copolymerisate aus Acrylsäureester und Butadien (vgl. DE-AW 12 38 207), ferner Elastomere von Copolymerisaten aus Acrylsäureestern mit Styrol, Acrylnitril und Vinylethern und Copolymerisate aus Ethylen, Propylen und einem nicht konjugierten Dien - (EPDM-Kautschuke).

Die vinylaromatischen Pfropfmonomeren $d_2$) sind Styrol, $\alpha$-Methylstyrol und/oder kernalkylierte Styrole mit bis zu 12 C-Atomen; als Monomere $d_3$) kommen (Meth)acrylsäurealkylester mit $C_1$-$C_8$-Alkylestern sowie (Meth)acrylnitril oder Mischungen davon in Betracht.

Die Pfropfcopolymerisation kann dabei bekannterweise in Lösung, Suspension oder vorzugsweise in Emulsion erfolgen. Die Weichphase des Pfropfmischpolymerisats weist, bei der bevorzugten Herstellung des Kautschuks und der Pfropfung in Emulsion einen mittleren Teilchendurchmesser ($d_{50}$-Wert der integralen Masseverteilung) von 0,08 $\mu$m auf. In der Regel liegt der $d_{50}$-Wert im Bereich von 0,1 bis 0,6 $\mu$m. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft.

Der Teil der Monomeren, der nicht auf den Kautschuk gepfropft ist, copolymerisiert für sich. Dieses Copolymerisat kann bei den hier in Rede stehenden Gemischen der Komponente A zugerechnet werden. Man kann den Anteil der gepfropften Monomeren dadurch ermitteln, daß man den Gelgehalt der Pfropfcopolymeren bestimmt.

Das Pfropfcopolymerisat wird in einem Lösungsmittel, z.B. in Methylethylketon gelöst; dabei lösen sich nur die nichtgepfropften, für sich allein copolymerisierten Monomeren. Der Bestandteil D ist, sofern vorhanden, mit für die Schlagzähigkeit der erfindungsgemäßen Formmasse verantwortlich.

Komponente E

Die erfindungsgemäße Formmasse kann von den unter C genannten Verstärkungsmitteln verschiedene Zusatzstoffe aufweisen. Als Zusatzstoffe seien genannt: Pigmente, Farbstoffe, Füllstoffe, Flammschutzmittel, weitere verträgliche Polymere, Antistatika, Antioxidantien und Schmiermittel. Als Füllstoffe kommen z.B. Glaskugeln, Talkum, Glimmer, Kaolin, calcinierter Kaolin, Quarzmehl, Kreide oder Wollastonit in Frage.

Die erfindungsgemäßen Formmassen werden nach den üblichen, für die Verarbeitung von Thermoplasten bekannten Verfahren zu Fertigteilen verarbeitet. Sie finden insbesondere Verwendung für Gehäuse von Elektrogeräten, Haushaltsgeräten, Telefonen, für Platten, Rohre, Folien, Kinderspielzeug und im KFZ-Bau.

Herstellung der erfindungsgemäßen Formmasse aus den Komponenten

Die Herstellung der erfindungsgemäßen Formmasse kann, wie nachstehend beschrieben, erfolgen:

Die Komponenten A, B und gegebenenfalls D werden als Schmelzen bei Temperaturen zwischen 200 und 280°C auf Extrudern, Walzen oder Knetern bei Verweilzeiten von einigen Minuten mit den Verstärkungsmitteln gemischt. Man kann aber auch Lösungen der Komponenten A, B und D oder Teilmischungen, z.B. A + B, herstellen und diese mit D vermengen, die Lösungsmittel anschließend entgasen und die Mischungen mit den Verstärkungsmitteln und dann gegebenenfalls mit den Zusatzstoffen abmischen und nochmals konfektionieren. Das Vermischen der Komponenten A, B und D erfolgt vorzugsweise in Gegenwart bzw. unter Zugabe der Verstärkungsmittel C, D und der Zusatzstoffe E.

Die in den Beispielen und Vergleichsversuchen genannten Parameter wurden wie folgt bestimmt:

1. Die Kerbschlagzähigkeit und Schlagzähigkeit in (KJ/m²) wurde nach DIN 53 453 an spritzgegossenen Normkleinstäben bei einer Massetemperatur von 260°C gemessen.

2. Der Elastizitätszugmodul in (N/mm²) wurde gemäß DIN 53 457 bestimmt.

3. Die Viskositätszahlen (VZ) $\eta$sp/c in ml/g wurden bei 25°C in einer 0,5 %igen Lösung in Dimethylformamid gemessen.

4. Der Vicat-Erweichungspunkt in °C wurde nach DIN 53 460, Verfahren B, in Silikonöl bestimmt.

5. Die Biegefestigkeit (N/mm²) wurde nach DIN 53 452 gemessen.

6. Die Reißfestigkeit (N/mm²) wurde nach DIN 53 455 bestimmt.

Es zeigt sich überraschenderweise, daß die erfindungsgemäße Formmasse eine hohe Wärmeformbeständigkeit, eine hohe Steifigkeit und gleichzeitig gute Zähigkeit aufweist und sich ohne Fehler verarbeiten läßt.

Für die Herstellung der erfindungsgemäßen Formmasse und der Vergleichsproben wurden die nachfolgenden beschriebenen Produkte verwendet: (Alle %-Angaben in Gew.-%)

Komponenten $A_1$ bis $A_3$

$A_1$: S-AN-Copolymerisat; 25 % AN; VZ = 80 (ml/g)

$A_2$: S-AN-Copolymerisat; 30 % AN; VZ = 80 (ml/g)

$A_3$: S-AN-Copolymerisat; 35 % AN; VZ = 80 (ml/g)

Komponenten $B_1$ bis $B_5$

$B_1$: S-AN-MSA-Terpolymerisat; 75 % Styrol, 25 % AN; 5 % MSA; VZ = 70 (ml/g)

$B_2$: S-AN-MSA-Terpolymerisat; 68 % Styrol, 22 % AN; 10 % MSA; VZ = 70 (ml/g)

$B_3$: S-AN-MSA-Terpolymerisat; 72 % Styrol, 12 % AN; 16 % MSA; VZ = 70 (ml/g)

$B_4$: S-AN-MSA-Terpolymerisat; 75 % Styrol, 10 % AN; 15 % MSA; VZ = 70 (ml/g)

$B_5$: S-AN-MSA-Terpolymerisat; 75 % Styrol, 25 % MSA; VZ = 70 (ml/g)

Weitere Eigenschaften der Komponenten $A_n$ und $B_n$ sind in Tabelle 1 aufgeführt.

Komponente C

E-Glasfasern geschnitten 4,5 mm

Faserdurchmesser 10 $\mu$m

Fabrikat OCF 429

Komponente $D_1$ bis $D_2$

$D_1$: 75 % Polybutadienkautschuk, gepfropft mit 25 % Styrol/Acrylnitril im Verhältnis 70:30, mittlere Teilchengröße 200 nm.

$D_2$: 75 % Polybutylacrylatkautschuk, gepfropft mit 25 % Styrol/Acrylnitril im Verhältnis 75:25, mittlere Teilchengröße 400 nm.

Komponente E

$E_1$: Octabromdiphenylether

$E_2$ Talkum

Die erfindungsgemäßen Formmassen werden in den nachfolgenden Beispielen näher erläutert, ohne daß damit eine Einschränkung vorgenommen werden soll, wobei die angegebenen Prozente Gewichtsprozente sind, sofern nicht anders vermerkt ist.

Beispiele 1 bis 14 und Vergleichsversuche I bis III

Die Komponenten $A_n$, $B_n$, $C_n$, $D_n$ und die Zusatzstoffe $E_n$ der Formmassen der Beispiele und der Vergleichsversuche wurden in den in der Tabelle 2 genannten Mengen in einem Fluidmischer vorgemischt und anschließend auf einem Kokneter bei etwa 220 bis 230°C unter Stickstoff innig verknetet. Die Verweilzeit betrug 5 Minuten. Das dabei erhaltene Granulat wurde auf einer Einwellen-Extruder-Schnecke aufgeschmolzen und zu gleichmäßigen, für die Spritzgußverarbeitung geeignetem Granulat abgeschlagen. In der Tabelle 2 sind die Eigenschaften der erhaltenen Mischungen aufgeführt.

Tabelle 1

| Produkt | Kerbschlagzähigkeit $(kJ/m^2)$ | Biegefestigkeit $(N/mm^2)$ | E-Modul $(N/mm^2)$ | Vicattemperatur $(^0C)$ |
|---|---|---|---|---|
| $A_1$ | 3 | 115 | 3600 | 107 |
| $A_2$ | 3 | 120 | 3700 | 107 |
| $A_3$ | 3 | 130 | 3800 | 107 |
| $B_1$ | 2 | 110 | 3600 | 114 |
| $B_2$ | 2 | 120 | 3700 | 123 |
| $B_3$ | 2 | 118 | 3700 | 135 |
| $B_4$ | 2 | 108 | 3700 | 134 |
| $B_5$ | 2 | 109 | 3700 | 142 |

Tabelle 2

| Bei-spiel | Zusammen-setzung (Gew.Tle) | Kerbschlag-zähigkeit $(kJ/m^2)$ | Schlag zähigkeit $(kJ/m^2)$ | Reiß-festig-keit $(N/mm^2)$ | Biege-festig-keit $(N/mm^2)$ | Elastizi-tätsmodul $(N/mm^2)$ | Vicat-temp. $(^0C)$ |
|---|---|---|---|---|---|---|---|
| 1 | 59 $A_1$<br>6 $B_1$<br>35 $D_1$ | 4,3 | 13,0 | 140 | 180 | 13000 | 110 |
| 2 | 59 $A_2$<br>6 $B_1$<br>35 $D_1$ | 4,3 | 13,2 | 142 | 183 | 13100 | 111 |
| 3 | 59 $A_3$<br>6 $B_1$<br>35 $D_1$ | 4,4 | 13,6 | 142 | 185 | 13200 | 111 |
| 4 | 59 $A_3$<br>6 $B_2$<br>35 $D_1$ | 4,6 | 16,3 | 160 | 195 | 13100 | 111 |
| 5 | 59 $A_3$<br>6 $B_3$<br>35 $D_1$ | 4,7 | 14,8 | 145 | 187 | 13200 | 112 |

Tabelle 2 (Fortsetzung)

| Bei-spiel | Zusammen-setzung (Gew.Tle) | Kerbschlag-zähigkeit $(kJ/m^2)$ | Schlag zähigkeit $(kJ/m^2)$ | Reiß-festig-keit $(N/mm^2)$ | Biege-festig-keit $(N/mm^2)$ | Elastizi-tätsmodul $(N/mm^2)$ | Vicat-temp. $(^0C)$ |
|---|---|---|---|---|---|---|---|
| 6 | 59 $A_3$<br>6 $B_4$<br>35 $D_1$ | 4,1 | 12,9 | 141 | 183 | 13100 | 112 |
| 7 | 52 $A_3$<br>13 $B_2$<br>35 $D_1$ | 4,7 | 15,8 | 157 | 193 | 13500 | 113 |
| 8 | 62 $A_3$<br>3 $B_3$<br>35 $D_1$ | 4,6 | 15,6 | 151 | 185 | 13000 | 112 |
| 9 | 52 $A_3$<br>13 $B_3$<br>35 $D_1$ | 4,4 | 14,8 | 149 | 190 | 13200 | 114 |
| 10 | 50 $A_3$<br>5 $B_2$<br>10 $C_1$<br>35 $D_1$ | 6,5 | 20,2 | 108 | 150 | 9900 | 108 |
| 11 | 50 $A_3$<br>5 $B_3$<br>10 $C_2$<br>35 $D_1$ | 7,2 | 24,4 | 102 | 148 | 10300 | 109 |
| 13 | 54 $A_3$<br>5 $B_2$<br>32 $D_1$<br>9 $E_1$ | 4,4 | 15,7 | 135 | 173 | 12800 | 109 |
| 14 | 54 $A_3$<br>5 $B_3$<br>30 $D_1$<br>10 $E_2$ | 4,0 | 15,2 | 121 | 165 | 10200 | 110 |

Tabelle 2 (Fortsetzung)

| Bei-spiel | Zusammen-setzung (Gew.Tle) | Kerbschlag-zähigkeit (kJ/m²) | Schlag zähigkeit (kJ/m²) | Reiß-festig-keit (N/mm²) | Biege-festig-keit (N/mm²) | Elastizi-tätsmodul (N/mm²) | Vicat-temp. (°C) |
|---|---|---|---|---|---|---|---|
| **Vergleichsversuche** | | | | | | | |
| I | 75 $A_3$<br>35 $D_1$ | 3,3 | 8,2 | 102 | 160 | 12500 | 108 |
| II | 75 $B_5$<br>35 $D_1$ | 3,5 | 9,8 | 109 | 163 | 12600 | 139 |
| III | 59 $A_3$<br>6 $B_5$<br>35 $D_1$ | 3,9 | 10,8 | 132 | 175 | 12800 | 113 |

**Ansprüche**

1. Verstärkte thermoplastische Formmasse, bestehend aus

A 5 bis 95 Gew.-%, bezogen auf A + B + C, mindestens eines Copolymeren, aufgebaut aus

$a_1$) 90 bis 50 Gew.-%, bezogen auf A, Styrol, $\alpha$-Methylstyrol, einem kernalkylsubstituierten Styrolderivat oder Mischungen dieser Monomeren,

$a_2$) 10 bis 50 Gew.-% (Meth)-acrylnitril,

B 95 bis 5 Gew.-%, bezogen auf A + B + C, mindestens eines Styrol als Monomerenbaustein enthaltenden Terpolymerisates,

C 5 bis 50 Gew.-%, bezogen auf A + B + C, eines Verstärkungsmittels,

dadurch gekennzeichnet, daß die Formmasse als Terpolymerisat B ein solches aufweist, das besteht aus

$b_1$) 90 bis 59 Gew.-%, bezogen auf B, eines Monomeren aus der Gruppe von Styrol, $\alpha$-Methylstyrol, den kernalkylierten Styrolen oder Mischungen dieser Monomeren,

$b_2$) 8 bis 48 Gew.-%, bezogen auf B, (Meth)-acrylnitril

und

$b_3$) 2 bis 30 Gew.-%, bezogen auf B, eines Monomeren aus der Gruppe der Acrylsäure, der Methacrylsäure, des Maleinsäureanhydrids oder Mischungen dieser Monomeren

und daß die Formmasse ferner als Verstärkungsmittel C an sich bekannte Glasfasern enthält.

2. Verstärkte thermoplastische Formmasse, bestehend aus

A 45 bis 65 Gew.-%, bezogen auf A + B + C, mindestens eines Copolymeren, aufgebaut aus

$a_1$) 80 bis 60 Gew.-%, bezogen auf A, Styrol, $\alpha$-Methylstyrol, einem kernalkylsubstituierten Styrolderivat oder Mischungen dieser Monomeren,

a₂) 20 bis 40 Gew.-% (Meth)-acrylnitril,

B 5 bis 35 Gew.-%, bezogen auf A + B + C, mindestens eines Styrol als Monomerenbaustein enthaltenden Terpolymerisates,

C 15 bis 40 Gew.-%, bezogen auf A + B + C, eines Verstärkungsmittels,

dadurch gekennzeichnet, daß die Formmasse als Terpolymerisat B ein solches aufweist, das besteht aus

b₁) 90 bis 50 Gew.-%, bezogen auf B, eines Monomeren aus der Gruppe von Styrol, α-Methylstyrol, den kernalkylierten Styrolen oder Mischungen dieser Monomeren,

b₂) 8 bis 48 Gew.-%, bezogen auf B, (Meth)-acrylnitril und

b₃) 2 bis 30 Gew.-%, bezogen auf B, eines Monomeren aus der Gruppe der Acrylsäure, der Methacrylsäure, des Maleinsäureanhydrids oder Mischungen dieser Monomeren

und daß die Formmasse ferner als Verstärkungsmittel C an sich bekannte Glasfasern enthält.

3. Formmasse nach Anspruch 2, dadurch gekennzeichnet, daß die Formmasse als Terpolymerisat B ein solches aufweist, das besteht aus

b₁) 85 bis 60 Gew.-%, bezogen auf B, eines Monomeren aus der Gruppe von Styrol, α-Methylstyrol, den kernalkylierten Styrolen oder Mischungen dieser Monomeren,

b₂) 10 bis 30 Gew.-%, bezogen auf B, (Meth)-acrylnitril und

b₃) 5 bis 15 Gew.-%, bezogen auf B, eines Monomeren aus der Gruppe der Acrylsäure und der Methacrylsäure.

4. Formmasse nach Anspruch 1, dadurch gekennzeichnet, daß sie zusätzlich, bezogen auf 100 Gew.-Teile A + B + C,

1 bis 50 Gew.Teile eines Pfropfmischpolymerisates D aufweist, das aufgebaut ist aus

d₁) 50 bis 90 Gew.-%, bezogen auf D, mindestens eines Kautschuks mit einer Glastemperatur unterhalb von 0°C,

d₂) 1 bis 49 Gew.-%, bezogen auf D, eines Monomeren aus der Gruppe von Styrol, den alkylsubstituierten Styrolderivaten oder Mischungen dieser Monomeren

und

d₃) 49 und 1 Gew.-%, bezogen auf D, eines Monomeren aus der Gruppe von (Meth)acrylnitril und (Meth)acrylsäureester mit C₁-C₈-Alkylresten oder Mischungen dieser Monomeren.

5. Formmasse nach Anspruch 1, dadurch gekennzeichnet, daß sie, bezogen auf 100 Teile A + B + C, bis zu 20 Gew.-Teile übliche Zusatzstoffe enthält.

6. Verfahren zur Herstellung von Formmassen gemäß Anspruch 1 durch Abmischen der Komponenten A, B und C in der Schmelze.

7. Verwendung der Formmasse gemäß Anspruch 1 zur Herstellung von Formteilen.

8. Formteile aus Formmasse gemäß Anspruch 1.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 160 778 (BASF)  *  Patentansprüche * | 1-3,5-8 | C 08 L 25/12 C 08 K 7/14 |
| D,X | EP-A-0 137 295 (BASF)  *  Patentansprüche * | 1-3,5-8 | |

RECHERCHIERTE
SACHGEBIETE (Int. Cl.4)

C 08 L
C 08 K

Der vorliegende Recherchenbericht wurde für alle Patentansprüche erstellt.

| Recherchenort | Abschlußdatum der Recherche | Prüfer |
|---|---|---|
| DEN HAAG | 12-08-1986 | FOUQUIER J.P. |